# EUROPEAN PATENT APPLICATION

(11) **EP 1 630 379 A1**
(43) Date of publication of application: **01.03.2006**
(21) Application number: 04735355.2
(22) Date of filing: 28.05.2004
(51) Int. Cl.: F01P 11/10, F01P 5/06, B60K 11/04, E02F 9/00

(54) **ENGINE ROOM STRUCTURE OF AND COOLING DEVICE OF CONSTRUCTION MACHINE**

(30) Priority: 28.05.2003 JP 2003151516
(71) Applicant: Shin Caterpillar Mitsubishi Ltd., Tokyo 158-0097 (JP)
(72) Inventor: MURAKAMI, Shouji, SHIN CATARPILLAR MITSUBISHI LTD., Tokyo 1580097 (JP)
(74) Representative: Klingseisen, Franz
(86) International application number: PCT/JP2004/007724
(87) International publication number: WO 2004/106707

(57) **Abstract**

The present invention relates to the engine room structure and cooling system in a construction machine. A discharge duct (32) is installed on the outside of an engine roommain body (21) so as to cover a discharge opening (22a) provided in an engine room (2B). A dimension and arrangement, in an axial flow direction (Y) of an cooling fan (25), of the discharge duct (32) are set so that the discharge duct (32) covers the engine (26) and the muffler (26a) in the axial flow direction (Y). The engine sound and the noise radiated from a muffler (26a) can be effectively intercepted by two wall surfaces, an engine room wall surface (21) and a duct wall surface (32), so the noise can be considerably reduced.

## Description

### TECHNICAL FIELD

The present invention relates to the engine room structure of a construction machine that contains an engine, a muffler, a cooling fan, and a cooling package and to the cooling system in a construction machine that includes an engine room, a cooling fan, and a cooling package.

### BACKGROUND ART

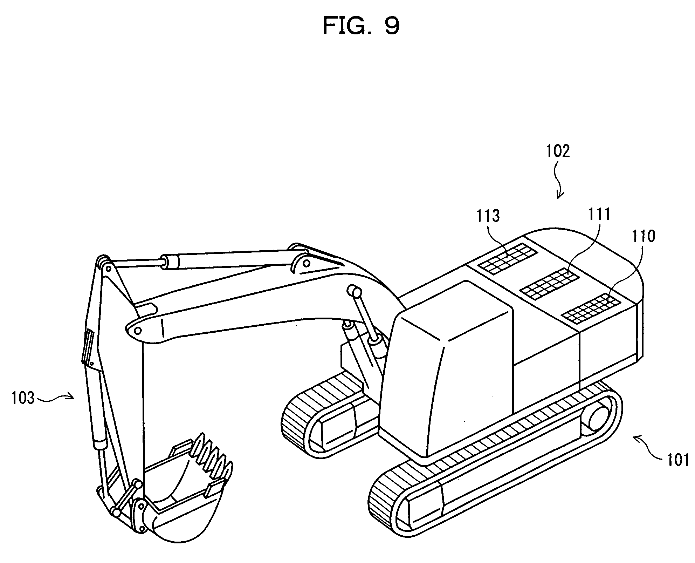

A wide variety of construction machines, such as travel construction machines (excavator, back hoe, hydraulic shovel and wheel loader, etc.), stationary construction machines (folk-lift, crane, etc.), etc., are employed in various fields such as construction sites, harbors, factories, etc. For example, a hydraulic shovel, which is a travel construction machine, is made up of three parts: a travel base 101; a revolving superstructure 102 revolvably disposed on the travel base 101; and an operating arm 103 extending from the revolving superstructure 102 to perform various operations, as shown in Fig. 9.

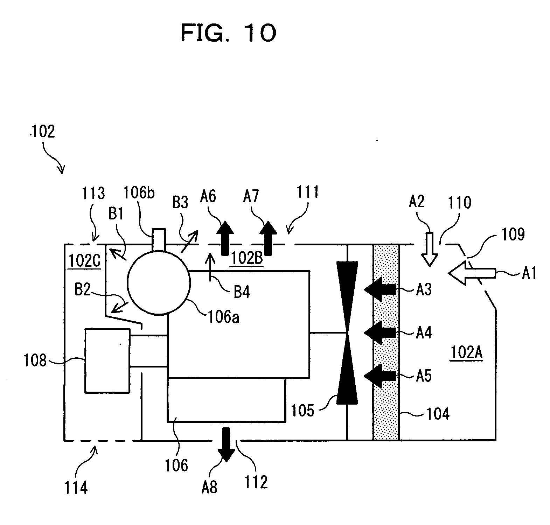

Now, the revolving superstructure 102 will be described in reference to Fig. 10 where the internal construction of a typical engine room is shown. As shown in the figure, the revolving superstructure 102 contains an engine 106, a hydraulic pump 108, etc. The operating arm 103 (see Fig. 9) is operated with the hydraulic pressure produced by the hydraulic pump 108 driven by the engine 106.

Construction machines are typically used in a severe environment, such as digging of stones and rocks in dams, tunnels, rivers, and roads, dismantling of buildings and structures, etc. In such an environment, the load exerted on the engine 106, hydraulic pump 108, and other components is high and can easily cause a rise in engine temperature or working-oil temperature. For this reason, in these construction machines, as shown in Fig. 10, a cooling package 104 consisting of a radiator or oil cooler of relatively large capacity is provided in the flow passage of the cooling air generated by the fan 105 driven with the engine 106. And with the cooling package 104, engine cooling water and working oil are cooled (e.g., see Japanese Laid-Open Utility Model Publication No. HEI 3-83324).

That is, with rotation of the fan 105, air (cooling air) is introduced through the upper openings (introduction openings) 109, 110 of a radiator room 102A in which the cooling package 104 is installed, as shown by arrows A1, A2. The cooling air cools the engine cooling water and working oil flowing through the cooling package 104 as it passes through the core of the cooling package 104 of fin structure, as indicated by arrows A3 to A5.

The air, cooling the engine cooling water and working oil and reaching a high temperature, is discharged out of the main engine room 102B through the discharge openings 111, 112 of the main engine room 102B, as indicated by arrows A6 to A8. The air also passes through the main engine room 102B and is discharged out of the engine room 102B through the discharge openings 113, 114 of the pump room 102C.

The exhaust gases from the engine 106 is silenced by a muffler 106a and is discharged out of the main engine room 102B through an exhaust gas tube 106b penetrating the ceiling surface of the main engine room 102B. At this time, the noise due to vibration will occur radially from the outer periphery of the muffler 106a, as indicated by arrows B1 to B3.

However, in the prior art shown in Fig. 10, the radial noise from the muffler 106a, and the engine sound indicated by an arrow B4, will leak out of the engine room 102B directly through the discharge openings 111, 112 or be transmitted through the wall surface of the engine room 102B. For this reason, the noise will grow louder.

The present invention has been made in view of the problemmentioned above. Accordingly, it is the obj ect of the present invention to provide a cooling system in a construction machine that is capable of considerably reducing the aforementioned noise.

### DISCLOSURE OF THE INVENTION

To achieve the aforementioned object of the present invention, the engine room structure of the present invention is an engine room structure in a construction machine which contains an engine, a muffler for silencing exhaust gases as they are discharged out of an engine room through an exhaust gas tube, acoolingpackage, andacooling fan for passing cooling air through the cooling package. The engine room structure comprises two major parts: (1) a discharge opening, disposed on an engine room main body, for discharging the cooling air from the engine room after the cooling package is cooled by the cooling air; and (2) a discharge duct, installed on an outside of the engine room main body so as to cover the discharge opening, for guiding out of the engine room the cooling air discharged from the discharge opening. The dimension and arrangement, in an axial flow direction of the cooling fan, of the discharge duct are set so that the discharge duct covers the engine and the muffler in the axial flow direction.

In this case, the dimension and arrangement, in an engine room width direction perpendicular to the axial flow direction, of the discharge duct are preferably set so that the discharge duct covers the engine and the muffler in the engine room width direction.

For instance, the aforementioned discharge gas tube has a gas discharge port exposed out of the engine room and the discharge duct.

Also, the aforementioned discharge gas tube may have a gas discharge port exposed within the discharge duct. In this case, the discharge gas tube is preferably constructed such that it discharges the exhaust gases in the same direction as a direction where the cooling air flows through the discharge duct.

And it is preferable that the aforementioned discharge opening be arranged at the same position as an outer periphery of said cooling fan with respect to the axial flow direction.

In the engine room structure of the present invention, a rectifying plate is preferably provided along the axial flow direction between the discharge duct and the engine room main body.

The cooling system of the present invention includes five major parts: (1) an engine room containing an engine and a muffler for silencing exhaust gases as they are discharged out of an engine room through an exhaust gas tube; (2) a discharge opening, which is disposed on an engine room main body and faces the engine room, for discharging cooling air; (3) a cooling fan, installed within the engine room, for circulating the cooling air; (4) a cooling package installed within the engine room; and (5) a discharge duct, installed on an outside of the engine room main body so as to cover the discharge opening, for guiding out of the engine room the cooling air discharged from the discharge opening. The dimension and arrangement, in an axial flow direction of the cooling fan, of the discharge duct are set so that the discharge duct covers the engine and the muffler in the axial flow direction.

In the cooling system of the present invention, the dimension and arrangement, in an engine room width direction perpendicular to the axial flow direction, of the discharge duct are preferably set so that the discharge duct covers the engine and the muffler in the engine room width direction.

In the cooling system of the present invention, the aforementioned discharge opening is preferably arranged at the same position as an outer periphery of said cooling fan with respect to the axial flow direction.

In the cooling system of the present invention, a rectifying plate is preferably provided along the axial flow direction between the discharge duct and the engine room main body.

According to the present invention, as described above, at least the dimension and arrangement, in the axial flow direction of the cooling fan, of the discharge duct are set so that the discharge duct covers the engine and the muffler in the axial flow direction. Therefore, the engine sound and the noise radiated from the muffler can be effectively intercepted by two wall surfaces, an engine room wall surface and a duct wall surface. In this manner, the noise can be considerably reduced.

### BRIEF DESCRIPTION OF THE DRAWINGS

FIG. 1 is a perspective view showing a construction machine to which a first embodiment of the present invention is applied;
FIG. 2 is a transverse sectional view showing an engine room structure and a cooling system constructed in accordance with the first embodiment of the present invention;
FIG. 3 is a perspective view showing the upper portion of the engine room structure of the first embodiment of the present invention;
FIG. 4 is a side view showing the engine room structure of the first embodiment of the present invention;
FIG. 5 is a plan view showing the engine room structure of the first embodiment of the present invention;
FIG. 6 is a transverse sectional view showing an engine room structure and a cooling system constructed in accordance with a second embodiment of the present invention;
FIG. 7 is a perspective view showing the upper portion of the engine room structure of the second embodiment of the present invention;
FIG. 8 is a side view showing the engine room structure of the second embodiment of the present invention;
FIG. 9 is a perspective view showing a conventional construction machine; and
FIG. 10 is a transverse sectional view showing the internal construction of the engine room of the conventional construction machine.

### BEST MODE FOR CARRYING OUT THE INVENTION

Embodiments of the present invention will hereinafter be described in reference to the drawings.

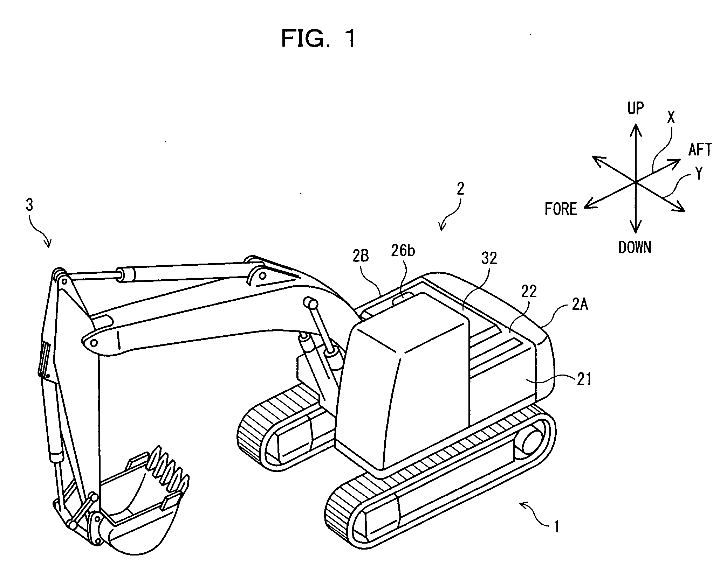

In Figs. 1 to 8, an arrow X indicates the fore-and-aft direction of a construction machine (also referred to as an engine room width direction), and an arrow Y indicates the right-and-left direction of the construction machine (also referred to as a fan axial-flow direction).

Also, in the following embodiments, a description will be given in the case where the present invention is applied to a hydraulic shovel.

### (1) First Embodiment

Initially, a construction machine according to a first embodiment of the present invention will be described in reference to Fig. 1. The figure is a perspective view showing the entire construction machine.

The construction machine is made up of three parts: a travel base 1; a revolving superstructure 2 revolvably disposed on the travel base 1; and an operating arm 3 extending from the revolving superstructure 2 to perform various operations. The revolving superstructure 2 includes a counterweight 2A arranged at its rear end, and an engine room 2B arranged in front of the counterweight 2A.

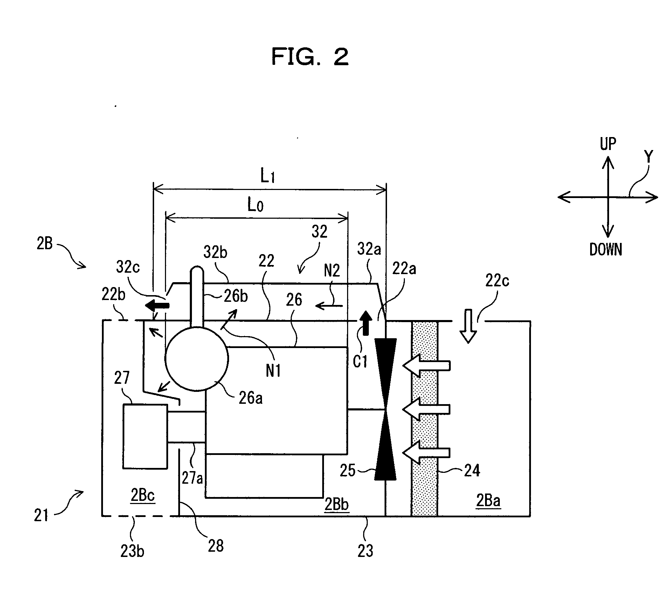

Next, an engine room structure as the first embodiment of the present invention will be described in reference to Fig. 2 where front view of the engine room 2B is shown. In the engine room 2B, an engine 26 is installed so its crank shaft is in the right-and-left direction Y, and an axial cooling fan 25 is disposed to the right side of the engine 26. The cooling fan 25 is installed so its axial direction coincides with the right-and-left direction Y of the construction machine, and is used to deliver cooling air into a cooling-air passage formed by the interior space of the engine room 2B. In the embodiment shown in Fig. 2, cooling air is delivered toward the left side. The cooling fan 25 shown in Fig. 2 is an engine-driven type mechanically coupled with the engine crank shaft, but may be a hydraulic type.

The engine room 2B also houses a muffler 26a, which has a center axis extending in the fore-and-aft direction X of the construction machine (the direction perpendicular to the paper surface of Fig. 2). The exhaust gases discharged from the engine 26 are silenced by this muffler 26a and is then discharged out of the engine room 2B through an exhaust gas tube 26b connected to the muffler 26a.

A cooling package 24, such as a radiator, an oil cooler, etc., is installed on the upstream side (right side of Fig. 2) in the fan axial-flow direction Y of the cooling fan 25. Also, a hydraulic pump 27 is mechanically coupled with the engine crank shaft and installed on the downstream side (left side of Fig. 2) in the fan axial-flow direction Y of the engine 26.

The interior of the engine room 2B is partitioned between the cooling package 24 and engine 26, and also between engine 26 and hydraulic pump 27. That is, the interior of the engine room 2B is divided into a radiator room 2Ba where the radiator (cooling package 24) is installed, a main room (hereinafter referred to as a main engine room) 2Bb where the engine 26 and cooling fan 25 are installed, and a pump room 2Bc where the hydraulic pump 27 is installed.

An engine room main body 21 forming the engine room 2B has a top wall surface 22. The top wall surface 22 facing the radiator room 2Ba is provided with an opening (introduction opening) 22c. The top wall surface 22 facing the main engine room 2Bb is provided with an opening (discharge opening) 22a.

The aforementioned discharge opening 22a is disposed near the outer periphery of the cooling fan 25. That is, the discharge opening 22a is disposed at the same, or nearly the same, position as the cooling fan 25 with respect to the fan axial-flow direction (right-and-left direction) Y. In the first embodiment shown in Fig. 2, the discharge opening 22a is positioned directly below the cooling fan 25 with respect to the fan axial-flow direction Y.

Typically, the pressure loss at the cooling package 24 is relatively great, so the main component of the flow of the cooling air sent out of the cooling fan 25 is the component in the centrifugal/revolving direction. That is, most of the cooling air sent out of the cooling fan 25 will flow in approximately the centrifugal direction, as indicated by an arrow C1.

Hence, the discharge opening 22a is formed in a portion of the top wall surface 22 where the cooling air sent out from the cooling fan 25 strikes as indicated by the arrow C1. That is, the discharge opening 22a is formed near the outer periphery of the cooling fan 25. Therefore, the cooling air sent out of the cooling fan 25 is smoothly discharged from the engine room 2B through the engine room discharge opening 22a without undergoing direct resistance.

Of course, the arrangement of the engine room discharge opening 22a is not limited to the aforementioned position, but may be arranged away from the cooling fan 25 in the fan axial-flow direction.

Also, as shown in Fig. 2, there is provided a duct 32 extending in the fan axial-flow direction (right-and-left direction of the construction machine) Y with respect to the discharge opening 22a. The duct 32 is mounted on the outside of the top wall surface 22 so as to cover the upper engine room discharge opening 22a and in such a manner that its upstream end is approximately aligned with the upstream end of the upper engine room discharge opening 22a.

The upstream end, near the radiator room 2Ba, of the duct 32 is closed, while the downstream end near the pump room 2Bc is open. The cooling air discharged from the engine room 2B through the engine room discharge opening 22a is deflected by the upstream portion 32a of the duct 32 so that it flows in the horizontal direction along the top wall surface 22. Thereafter, while the horizontal flow is being guided along the top wall surface 22 by the duct downstream portion 32b, the cooling air is discharged out of the engine room 2B.

And in the above-described engine room structure, if the cooling fan 25 is operated, air (cooling air) is introduced into the engine room 2B (cooling-air passage) through the introduction opening 22c and is passed through the cooling package 24. Thereafter, the cooling air is discharged out of the engine room 2B through the engine room discharge opening 22a and duct 32. The cooling water and the working oil of the hydraulic pump 27, flowingthrough the cooling package 24, are cooled by the cooling air as it passes through the core of the cooling package 24.

That is, the cooling system of the present invention comprises the introduction opening 22c, engine room 2B (chambers 2Ba, 2Bb, and 2Bc), cooling package 24, cooling fan 25, discharge opening 22a, and duct 32.

Note that the cooling air introduced into the engine room 2B flows slightly into the pump room 2Bc through the gap between the connecting rod 27a (which extends between the engine 26 and hydraulic pump 27) and the partition wall 28 (which divides the engine room 2B into the main engine room 2Bb and pump room 2Bc). For this reason, the top wall surface 22 and bottom wall surface 23, which face the pump room 2Bc, are provided with auxiliary openings 22b and 23b in the form of a mesh. The cooling air flowing in the pump room 2Bc is discharged out of the engine room 2B through the openings 22b and 23b.

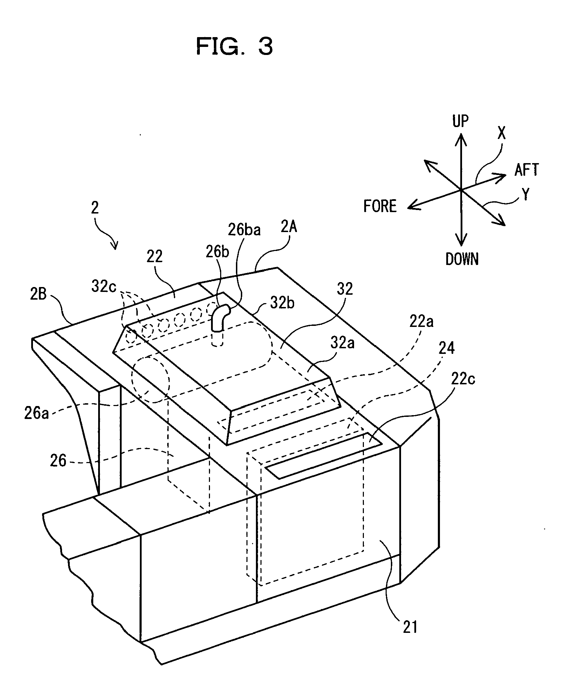

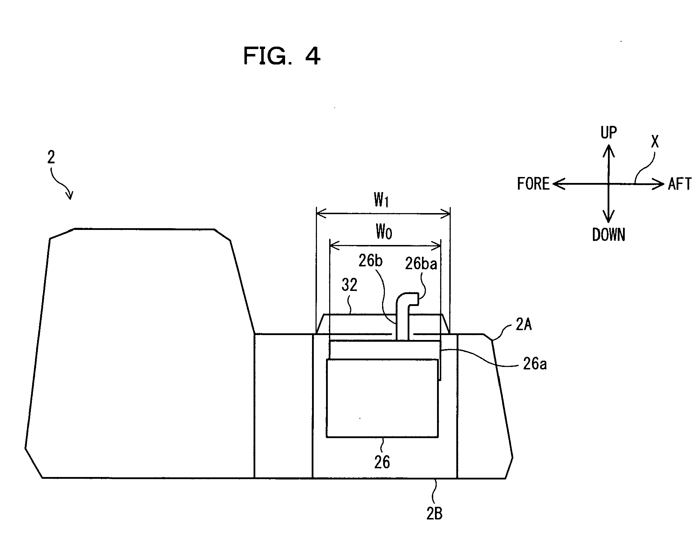

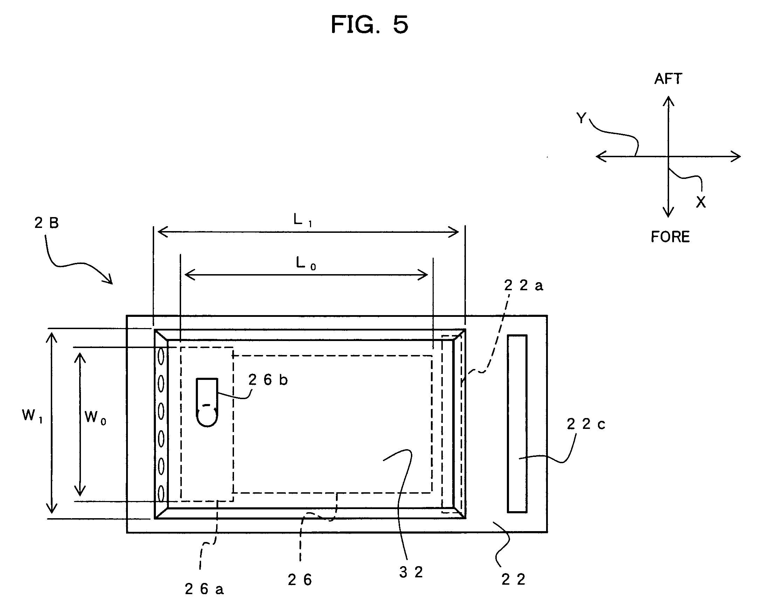

Now, the engine room structure will be described in further detail in reference to Figs. 3 to 5 where the engine room structure is shown. Fig. 3 is a perspective view of the engine room, Fig. 4 is a side sectional view of the engine room, and Fig. 5 is a plan view of the engine room.

The engine room discharge opening 22a in the engine room 2B is elongate in the engine room width direction X, as shown in Figs. 3 and 5. The duct 32 is formed into the shape of approximately a box. With the duct 32 mounted on the top wall surface 22, the upstream portion 32a of the duct 32 is open to the engine room discharge opening 22a, and the downstream end in the fan axial-flow direction Y of the duct 32 has a plurality of openings 32c relatively short in the engine room width direction X (e.g., circular openings in this example), which are arranged along the engine room width direction X.

As shown in Fig. 5, the length L₁ and arrangement in the fan axial-flow direction Y of the duct 32 are set so that the duct 32 covers the engine 26 and muffler 26a in the fan axial-flow direction Y. That is, the length L₁ is set equal to or greater than the length L₀ of an aggregation of the engine 26 and muffler 26a (L₁ ≧ L₀). At the same time, the duct 32 is arranged so that a region defined by the length L₁ contains a region defined by the length Lo.

Likewise, the width W₁ and arrangement, in the engine room width direction X perpendicular to the fan axial-flow direction Y, of the duct 32 are set so that the duct 32 covers the engine 26 and muffler 26a in the engine room width direction X. That is, the width W₁ is set equal to or greater than the width L₀ of an aggregation of the engine 26 and muffler 26a (L₁ ≧ L₀). At the same time, the duct 32 is arranged so that a region defined by the width W₁ contains a region defined by the width W₀.

As shown in Figs. 3 and 4, the exhaust gas tube 26b is connected to the top surface of the muffler 26a, then penetrates the top wall surface 22 of the engine room 2B and the duct 32 in the vertical direction of the engine room 2B, and the gas discharge port 26ba thereof is arranged out of the engine room 2B. The exposed portion of the exhaust gas tube 26b is bent rearward so that exhaust gases are discharged rearward from the gas discharge port 26ba.

Since the engine room structure and cooling system in the construction machine of the first embodiment are constructed as described above, the cooling air discharged out of the engine room 2B through the engine room discharge opening 22a is deflected in the horizontal direction by the duct 32 and is then discharged out of the engine room 2B. Therefore, the propagation direction of the engine sound propagating out of the engine room 2B through the space formed by the duct 32, and the propagation direction of the noise radiated from the muffler 26a, are deflected in the horizontal direction.

The noise produced horizontally by a construction machine can be suppressed, for example, by enclosing a working site with a shielding. However, providing a shielding to suppress the noise vertically produced is a large-scale operation and not practical. In addition, part of the noise horizontally produced is absorbed by buildings, the ground, etc., but since there is no object to absorb the noise vertically produced, the vertical noise can propagate widely.

Therefore, if the propagation direction of the noise is deflected in the horizontal direction, the propagation of the noise can be narrowed (spreading of the noise can be suppressed).

In addition, the engine sound (which propagates through the space formed between the duct 32 and the top wall surface 22) indicated by an arrow N2 (in Fig.2) and the radial noise are absorbed and attenuated by the interior wall surface of the duct 32, and consequently, the noise is suppressed.

Part of the engine sound and part of the noise radiated from the muffler 26a are transmitted through the top wall surface 22, as indicated by an arrow N1 of Fig. 2. However, the transmitted engine sound and radial noise are attenuated by the wall surface of the duct 32. That is, the engine sound and radial noise are doubly attenuated by the top wall surface 22 of the engine room 2B and the duct 32 . This structure is called a double-deck structure.

In addition, by providing the duct 32, the cooling air is discharged at a position away from the engine room discharge opening 22a in the fan axial-flow direction Y. The cooling air is also discharged toward a side remote from the engine room introduction opening 22c. With this arrangement, the cooling air of high temperature after an exchange of heat between it and the cooling package 24, discharged out of the engine room 2B, can be prevented from being reintroduced through the engine room introduction opening 22c. That is, the engine room 2B does not spool up discharged air.

### (2) Second Embodiment

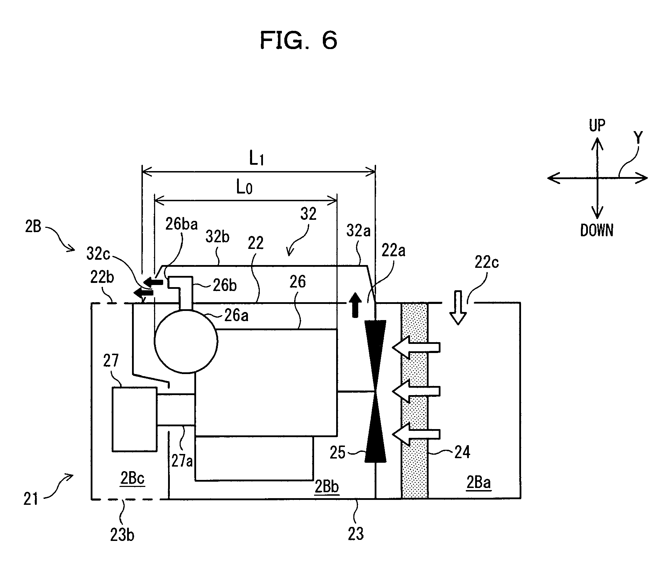

An engine room and a cooling system according to a second embodiment of the present invention will be described in reference to Figs. 6 to 8.

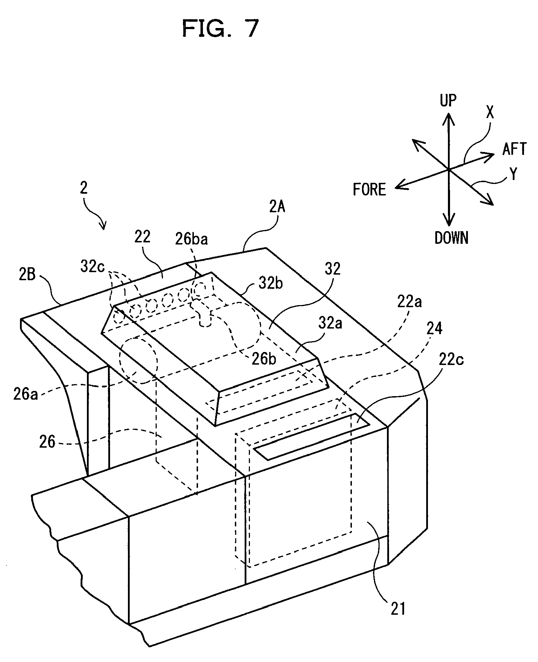

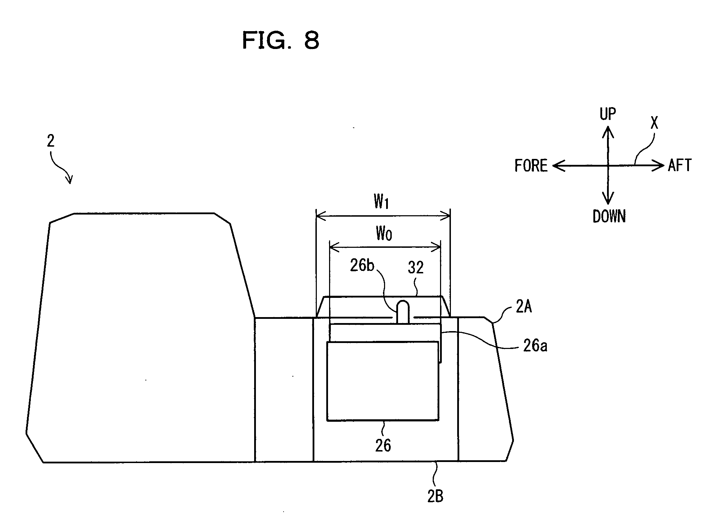

Fig. 6 is a transverse sectional view of an engine room 2B, Fig. 7 is a perspective view of the external upper portion of the engine room 2B, and Fig. 8 is a side sectional view of the engine room 2B. Note that the same parts as the first embodiment are given the same reference numerals.

An exhaust gas tube 26b in the engine room and cooling system of the second embodiment differs in shape from the first embodiment, as shown in the figures. More specifically, the gas discharge port 26ba of the exhaust gas tube 26b is arranged in the space between a top wall surface 22 and a duct 32 and is also bent toward the downstream side in the fan axial-flow direction of the duct 32. Because the remaining construction is the same as the first embodiment, a description is omitted.

Since the engine room and cooling system of the second embodiment are thus constructed, the cooling-air discharge efficiency can be enhanced by an ejector effect.

That is, the flow speed V_{G} of the exhaust gases discharged from the exhaust gas tube 26b is typically faster than the flow speed V_{A} of the cooling air discharged from an engine room discharge opening 22a (V_{G} > V_{A}), so the discharge of the cooling air from the duct 32 is pulled by the flow of exhaust gases. In this manner, the cooling-air discharge efficiency can be enhanced. If the cooling-air discharge efficiency is enhanced, costs can be reduced by relaxing specifications for the cooling fan 25.

### (3) Other

While the present invention has been described with reference to the preferred embodiments thereof, the invention is not to be limited to the details given herein, but may be modified within the scope of the invention hereinafter claimed.

For example, in the aforementioned embodiments, the duct 32 is mounted on only the top wall surface 22 so as to cover the engine 26 and muffler 26a. However, since such a duct is mounted on the outside wall surface of the engine room for the purpose of considerably reducing the leakage of the engine sound and the noise radiated from the muffler, ducts may be mounted on both the top wall surface 22 and the bottom wall surface 23, or a duct may be mounted on only the bottom wall surface 23.

Also, in the air passage between the duct 32 and the top wall surface 22, a plurality of partition plates (rectifying plates) may be provided so as not to interfere with the exhaust gas tube 26b and in such a manner that the air passage is divided in the engine room width direction X. The rectifying plates are disposed, for example, parallel with the fan axial-flow direction Y. With these partition walls, the cooling air flowing through the air passage is prevented from flowing in the engine room width direction X and can flow smoothly toward the discharge port 32c. Therefore, the back pressure of the cooling air can be reduced.

## Claims

1. An engine room structure in a construction machine which contains an engine (26), a muffler (26a) for silencing exhaust gases as they are discharged out of an engine room (2B) through an exhaust gas tube (26b), a cooling package (24), and a cooling fan (25) for passing cooling air through said cooling package (24), said engine room structure comprising:
a discharge opening (22a), disposed on an engine room main body (21), for discharging the cooling air from said engine room (2B) after said cooling package (24) is cooled by the cooling air; and
a discharge duct (32), installed on an outside of said engine room main body (21) so as to cover said discharge opening (22a), for guiding out of said engine room (2B) said cooling air discharged from said discharge opening (22a);
wherein a dimension and arrangement, in an axial flow direction (Y) of said cooling fan (25) of said discharge duct (32) are set so that said discharge duct (32) covers said engine (26) and said muffler (26a) in said axial flow direction (Y).

2. The engine room structure as set forth in claim 1, wherein a dimension and arrangement, in an engine room width direction (X) perpendicular to said axial flow direction (Y), of said discharge duct (32) are set so that said discharge duct (32) covers said engine (26) and said muffler (26a) in said engine room width direction (X).

3. The engine room structure as set forth in claim 1 or 2, wherein said discharge gas tube (26b) has a gas discharge port (26ba) exposed out of said discharge duct (32).

4. The engine room structure as set forth in claim 1 or 2, wherein said discharge gas tube (26b) has a gas discharge port (26ba) exposed within said discharge duct (32).

5. The engine room structure as set forth in claim 4, wherein said discharge gas tube (26b) is constructed such that it discharges said exhaust gases in the same direction as a direction where the cooling air flows through said discharge duct (32).

6. The engine room structure as set forth in any one of claims 1 through 5, wherein said discharge opening (22a) is arranged at the same position as an outer periphery of said cooling fan (25) with respect to said axial flow direction (Y).

7. The engine room structure as set forth in any one of claims 1 through 6, wherein a rectifying plate is provided along said axial flow direction (Y) between said discharge duct (32) and said engine room main body (21) .

8. A cooling system in a construction machine comprising:
an engine room (2B) containing an engine (26) and a muffler (26a) for silencing exhaust gases as they are discharged out of an engine room (2B) through an exhaust gas tube (26b);
a discharge opening (22a), which is disposed on an engine room main body (21) and faces said engine room (2B), for discharging cooling air;
a cooling fan (25), installed within said engine room (2B), for circulating said cooling air;
a cooling package (24) installed within said engine room (2B); and
a discharge duct (32), installed on an outside of said engine room main body (21) so as to cover said discharge opening (22a), for guiding out of said engine room (2B) said cooling air discharged from said discharge opening (22a);
wherein a dimension and arrangement, in an axial flow direction (Y) of said cooling fan (25), of said discharge duct (32) are set so that said discharge duct (32) covers said engine (26) and said muffler (26a) in said axial flow direction (Y).

9. The cooling system as set forth in claim 8, wherein a dimension and arrangement, in an engine room width direction (X) perpendicular to said axial flow direction (Y), of said discharge duct (32) are set so that said discharge duct (32) covers said engine (26) and said muffler (26a) in said engine room width direction (X).

10. The cooling system as set forth in claim 8 or 9, wherein said discharge opening (22a) is arranged at the same position as an outer periphery of said cooling fan (25) with respect to said axial flow direction (Y).

11. The cooling system as set forth in any one of claims 8 through 10, wherein a rectifying plate is provided along said axial flow direction (Y) between said discharge duct (32) and said engine room main body (21).
